Europäisches Patentamt

European Patent Office

Office européen des brevets

(11) Publication number: **0 367 838**
**A1**

# EUROPEAN PATENT APPLICATION

(21) Application number: **88118470.9**

(22) Date of filing: **05.11.88**

(51) Int. Cl.5: **C08L 95/00, //(C08L95/00, 57:00)**

(43) Date of publication of application:
**16.05.90 Bulletin 90/20**

(84) Designated Contracting States:
**BE CH DE ES FR GB IT LI NL SE**

(71) Applicant: **BASF Aktiengesellschaft**
**Carl-Bosch-Strasse 38**
**D-6700 Ludwigshafen(DE)**

(72) Inventor: **Moore, Richard Brown**
**1119 Deefield Road**
**Richmond Texas(US)**
Inventor: **Fitzgerald, Paul L**
**1821 Hidden Harbor Road**
**Hixson Tennessee 37343(US)**
Inventor: **Pole, Ernest G**
**1862 Lakeland Avenue**
**Sarnia Ontario(CA)**

(54) **Setting asphalt emulsions.**

(57) Anionic emulsions of bitumen and/or tar which contain a latex of a rubbery polymer may be set using a destablizing system comprising either an alkali silicofluoride in the presence of a sulfamate or a mixture of an amine in the presence of a divalent metal ion. The setting time for such emulsions can be reduced to less than half an hour.

EP 0 367 838 A1

# SETTING ASPHALT EMULSIONS

The present invention relates to the destabilization of emulsions of bitumen and/or coal tar which are stabilized with emulsifiers which become insoluble or are significantly reduced in activity at pH's less than about 7.5, preferably less than 7.0, or in the presence of divalent metal ion-amine complexes.

Emulsions of bitumen (for example asphalt) and/or coal tar have a wide range of uses including binders for roads, water barriers for sub-surface foundations of a building, and saturants for webs such as glass or polyester to make water-proof webs which may be cut into shingles. In many of these applications it is desired to cause the emulsion of bitumen and/or coal tar to destabilize so that the bitumen and/or coal tar sets and does not flow. This is particularly important in highway construction where the highway is closed until the bitumen and/or coal tar emulsion is set to prevent damage and accidents which may be caused by stones or unbroken emulsion thrown up by traffic. One particular concern is the potential for breaking car windshields.

It is also desired to improve the water resistance of materials made from such emulsions of bitumen and/or coal tar. This is particularly important in roofing applications.

There are a number of references which teach that emulsions of bitumen or coal tar may be gelled or set using alkali metal silicofluorides. This art is represented by Chemical Abstract 91:8832 of Czech Patent 176,308 issued February 15, 1979; Chemical Abstract 96:39864S of Japanese Patent 39,352 issued September 12, 1981; E.P. Application 45,619 published February 10, 1982; and German Offenlegungsschrift 2,363,085 published July 4, 1974.

Unfortunately, bitumen emulsions have a very narrow tolerance to alkali metal silicofluorides. Thus, the silicofluoride must be provided within a very precise limit. If too little is provided, the emulsion will destabilize too slowly; and if too much is used, the emulsion will set too fast. This will not permit the emulsions to be worked. There is a need to develop a system which provides a greater tolerance to destabilization of bitumen and/or tar emulsions.

Additionally, the silicofluoride agents are time delay gelling agents. That is, the agent will cause the emulsion to destabilize a relatively short time after the silicofluoride is added to the asphalt emulsion. Generally the silicofluoride must be post added to the emulsion. There is a need for a new type of destabilizer which provides for a longer pot life.

The present invention seeks to address these problems.

The present invention provides a process for destabilizing an anionic emulsion of bitumen, coal tar or mixtures thereof, comprising at least one film forming rubbery polymer in finely divided form, said emulsion being stabilized with an emulsifier which becomes insoluble at pH's less than about 7.5 or in the presence of amine-divalent metal complexes, which comprises contacting per 100 parts by dry weight of said emulsion with a destabilization system selected from the group consisting of:

(a) at least about 0.1 parts by weight of a metal or ammonium silicofluoride and from about 0.05 to 10 parts by weight of one or more members selected from the group consisting of ammonium sulfamate, ammonium sulfate, $C_{1-8}$ alkyl and $C_{1-8}$-hydroxyalkyl amines and sulfamates, $C_{1-8}$ alkyl and $C_{1-8}$-hydroxyalkyl amine sulfates and ammonium salts of $C_{1-6}$ aliphatic carboxylic acids; and

(b) at least about 0.5 parts, dry weight, of a compound which releases or produces a divalent metal ion and a sufficient amount of an ammonia or ammonium ion releasing compound to provide at least 0.05 parts, dry weight, of ammonia or ammonium ion.

The present invention also provides: a composition comprising per 100 parts by dry weight of an anionic emulsion of bitumen, coal tar or mixtures thereof, said emulsion being stabilized with an anionic stabilizer which becomes insoluble at pH's less than about 7.5 or in the presence of an amine-bivalent metal complex, up to 50 parts by dry weight of one or more polymers or latices of polymers, provided said latex is stabilized with an emulsifier which becomes insoluble at a pH of less than about 7.5 or in the presence of divalent metal ion-amine complexes, said polymer being selected from the group consisting of:

(a) polymers comprising:

(i) from 80 to 20 weight per cent of a $C_{8-12}$ vinyl or vinylidene aromatic monomer which may be unsubstituted or substituted by a $C_{1-4}$ alkyl radical or a chlorine atom; and

(ii) from 20 to 80 weight per cent of a $C_{4-6}$ conjugated diolefin which may be unsubstituted by a chlorine atom;

(b) homopolymers or copolymers of $C_{4-6}$ conjugated diolefins which may be unsubstituted or substituted by a chlorine atom;

(c) polymers comprising:

(i) from about 5 to 40 weight per cent of a $C_{2-8}$ alkenyl nitrile; and

(ii) from about 95 to 60 weight per cent of a $C_{4-6}$ conjugated diolefin;

(d) polymers comprising:

(i) from about 5 to 40 weight per cent of a $C_{2-3}$ olefin; and

(ii) from about 95 to 60 weight per cent of one or more monomers selected from the group consisting of $C_{2-8}$ alkenyl esters of $C_{1-8}$ saturated carboxylic acids, and $C_{1-8}$ alkyl or hydroxyalkyl esters of $C_{3-8}$ ethylenically unsaturated carboxylic acids; and

(e) co or homo polymers of $C_{1-8}$ alkyl or hydroxyalkyl esters of $C_{3-8}$ ethlenically unsaturated carboxylic acids; and a destabilizing agent selected from the group consisting of:

a) 0.1 to 3 parts, dry weight, of an alkali metal silicofluoride and 0.1 to 5 parts of one or more members consisting of ammonium sulfamate, $C_{1-4}$ alkyl amine sulfamates and ammonium salts of $C_{1-6}$ aliphatic carboxylic acids; and

b) at least 0.5 dry parts of a compound which releases or produces a divalent metal ion and a sufficient amount of an ammonia or ammonium releasing compound to provide at least 0.05 parts by weight of ammonia or ammonium ion.

The emulsions which may be treated in accordance with the present invention are emulsions of bitumen (for example asphalt), coal tar or mixtures thereof. The asphalt may be a naturally occurring asphalt such as Trinidad Lake Asphalt, or it may be partly refined. The asphalt may be air blown or extracted to have the required penetration and ductility. The bitumen or tar may also be softened by blending with softer asphalts, or oils or plasticizers. The bitumen or tar may also be modified with dry polymer prior to formation of an emulsion. Suitable grade(s) of bitumen or coal tar may also be used in accordance with the present invention. The bitumen or tar may have a penetration from 25 to 300 at 77° F (25° C).

The emulsion may be purchased or prepared in a conventional manner using a colloid mill or other suitable emulsifying techniques. The emulsifier or stabilizer should be anionic and should become insoluble or have a significantly reduced activity at pH's of less than about 7.5, preferably less than 7.0, or in the presence of divalent metal ion - amine complexes. Suitable emulsifiers include soaps of $C_{12-18}$ long chain fatty acids or oils, rosin, hydrogenated rosins and tall oil. Generally, the emulsifier will be present in an amount from about 0.1 to 10, preferably 0.25 to 2 weight per cent based on the wet weight of the emulsion. The emulsion will generally contain up to 90, most preferably 55 to 75 weight per cent of bitumen and/or tar and at least 10, most preferably 45 to 25 weight per cent of water. Preferably, the emulsion will be rapid setting (RS) or medium setting (MS), however, slow setting emulsions may also be used in accordance with the present invention. This is particularly true where improved water resistance is desired rather than rapid setting.

The emulsions used in accordance with the present invention further contain 1 to about 50 preferably about 35, most preferably 1-15, parts by dry weight of a polymer per 100 parts by weight of bitumen and/or coal tar. The polymer may be added dry, or as a solution. In some cases the polymer may be added to the bitumen and/or tar prior to making the emulsion. Most preferably the polymer is added to the bitumen and/or tar emulsion as an aqueous dispersion or latex. If the polymer is added as a latex, it should be stabilized with a surfactant system similar in charge and destabilization characteristics to those of the bitumen and/or coal tar emulsion. That is, the emulsifier should be anionic, and one which becomes insoluble at pH's less than about 7.5 or in the presence of a divalent metal ion-amine complex. Suitable emulsifiers have been discussed above.

Suitable polymers may be characterized as styrene-butadiene (SB) polymers, polybutadiene polymers, acrylonitrile-butadiene (NB) polymers, ethylene-vinyl acetate (EVA) polymers, acrylate polymers, natural rubber (NR) or polychloroprene polymers.

Styrene butadiene type polymers comprise from about 80 to 20, preferably 60 to 40 weight per cent of one or more $C_{8-12}$ vinyl or vinylidene aromatic monomers which may be unsubstituted or substituted by a $C_{1-4}$ alkyl radical or a chlorine atom; and

from 20 to 80, preferably from 40 to 60 weight per cent of one or more $C_{4-6}$ conjugated diolefins which may be unsubstituted or substituted by a chlorine atom.

Suitable $C_{8-12}$ vinyl or vinylidene aromatic monomers include styrene, and alpha methyl styrene. Suitable $C_{4-6}$ conjugated diolefins include butadiene, isoprene, and chloroprene.

The polybutadiene type polymers are homo or co-polymers of $C_{4-6}$ conjugated diolefins which may be unsubstituted or substituted by a chlorine atom. Suitable diolefins have been discussed above. This group of polymers include latices of natural rubber and polychloroprene.

The acrylonitrile butadiene type polymers comprise:

from about 5 to 40, preferably about 15 to 35 weight per cent of a $C_{2-8}$ alkenyl nitrile and from about 95 to 60, preferably about 85 to 65 weight per cent of a conjugated diolefin.

Suitable alkenyl nitriles include acrylonitrile (vinyl cyanide) and methacrylonitrile. Suitable conjugated

3

diolefins include butadiene and isoprene.

Useful ethylene vinyl acetate type polymers comprise:

from about 5 to 40, preferably 10 to 30 weight per cent of a $C_{2-3}$ olefin; and

from about 95 to 60, preferably 90 to 70 weight per cent of one or more monomers selected from the group consisting of $C_{2-8}$ alkenyl esters of $C_{1-8}$ saturated carboxylic acids and $C_{1-8}$ alkyl and hydroxyalkyl esters of $C_{3-8}$ ethylenically unsaturated carboxylic acids.

Ethylene and propylene are useful olefins. Suitable $C_{2-8}$ alkenyl esters of $C_{1-8}$ saturated carboxylic acids include vinyl acetate. Suitable $C_{1-8}$ alkyl and hydroxyalkyl esters of $C_{3-8}$ ethylenically unsaturated carboxylic acids include the esters of acrylic and methacrylic acids such as methyl acrylate, ethyl acrylate, butyl acrylate, hydroxyethyl acrylate, ethylhexyl acrylate, and the methacrylate homologues of these esters.

Suitable acrylate type polymers include co or homo polymers of one or more esters of $C_{1-8}$ alkyl or hydroxyalkyl esters of $C_{3-8}$ ethylenically unsaturated carboxylic acids. Suitable esters have been discussed immediately above.

The polymers useful in the present invention may be a blend of the above polymers and up to about 20, preferably less than 15 weight percent of the above polymers which contain up to 15, preferably less than 5 weight percent of one or more functional monomers. The functional monomers may be $C_{3-6}$ ethylenically unsaturated carboxylic acids; $C_{1-8}$ alkyl and hydroxyalkyl esters of such acids; amides of such acids which may be unsubstituted or substituted at the nitrogen atom by up to two $C_{1-4}$ alkyl and/or hydroxyalkyl radicals; and $C_{3-6}$ ethylenically unsaturated carboxylic acids.

Suitable polymers are commercially available as latices with a polymer content up to about 75 weight per cent. The average particle size of the polymer may vary from about 40 to 250 nm. Many latices have a polymer particle size from 120 to 250 nm. In some applications it may be desirable to use a very small particle size from 60 to 100 nm, more preferably from 80 to 100 nm.

For example: Tech-Book Facts Pliopave (Trademark) Latex for Bitumen Modification, published in the mid to late 1960's by the Chemical Division of The Goodyear Tire and Rubber Company suggest that a small particle size aids the dispersion of latex in asphalt. Small particle size latices are also disclosed in U.S. Patents 3,835,117 and 3,897,380 issued September 10, 1974 and July 29, 1975 to Walaschek and, U.S. Patent 4,544,690 issued October 1, 1985 assigned to Reichold Chemicals Inc.

The emulsion of bitumen and/or tar modified with polymer may contain up to 90, most preferably from 50 to 75 weight % solids.

The present invention contemplates two types of destabilization systems. The first destabilizing system comprises an ammonium, or metal silicofluoride used in conjunction with one or more members selected from the group consisting of ammonium sulfamate, ammonium sulfate, $C_{1-8}$, preferably $C_{1-4}$ alkyl and hydroxyalkyl amine sulfamates, $C_{1-8}$, preferably $C_{1-4}$ alkyl and hydroxyalkyl amine sulfates and ammonium salts of $C_{1-6}$ alphatic carboxylic acids, preferably ammonium acetate.

The silicofluoride is preferably an alkali metal silicofluoride, most preferably sodium silicofluoride. It is used in an amount from at least about 0.1 parts by dry weight per 100 parts by weight of solids comprising asphalt and the optional polymer in the emulsion. Preferably, the silicofluoride is used in an amount from about 0.1 to 15, most preferably from 0.1 to 3 parts dry weight per 100 parts dry weight of solids in the emulsion.

The second component, the sulfamate, sulfate or ammonium salt of a $C_{1-6}$ aliphatic carboxylic acid is used in an amount from about 0.05 to 10, preferably 0.1 to 10, most preferably 0.1 to 3, parts by dry weight ammonium per 100 parts by dry weight of emulsion. Preferably, the second component is selected from the group consisting of ammonium sulfamate, $C_{1-4}$ alkyl and hydroxyalkyl sulfamates and sulfates, ammonium salts of $C_{1-4}$ aliphatic carboxylic acids, preferably ammonium sulfamates or ammonium acetate.

The second destabilizing system comprises an agent which releases at least 0.05 parts by weight of ammonium ions per 100 parts by dry weight of emulsion. Preferably the agent comprises from about 0.1 to 10, most preferably 0.1 to 5 parts by dry weight of one of more members selected from the group consisting of ammonium salts of $C_{1-16}$ preferably $C_{1-6}$, aliphatic organic acids, and $C_{1-4}$ alkyl and hydroxyalkyl amines and at least about 0.5, preferably at least 3 parts by weight of a material which releases a divalent metal ion. In situations where the divalent metal ion is not supplied from mineral aggregate a divalent metal releasing compound may be added to the emulsion in an amount to provide at least about 0.5, preferably 3 most preferably from 3 to 15 parts of divalent metal ion per 100 parts of emulsion. In applications where the emulsion is applied to aggregate the metal ion content may be supplied from the aggregate rather than being supplied to the emulsion prior to application to the aggregate.

A preferred ammonium salt is ammonium acetate. A preferred amine is ethylamine or ethanolamine.

The above systems may be used in conjunction with from about 0.1 to 10, preferably 0.3 to 5 parts by dry weight per 100 parts by dry weight of solids in said emulsion of one or more members selected from

4

the group consisting of: ammonium sulfamate, $C_{1-8}$ preferably $C_{1-4}$ alkyl or hydroxyalkyl amine sulfamates, $C_{1-8}$ preferably $C_{1-4}$ alkyl or hydroxyalkyl amine sulfates.

As noted above, in many instances the emulsions of the present invention will be applied to an aggregate. When the emulsion is applied to an aggregate, the divalent metal ions may be provided from the aggregate. In other applications where there is no source of metal ions, they may be added to the emulsion. Particularly perferred divalent metal ions are zinc, cadmium and calcium ions.

When the silicofluoride gelling system is used, the emulsion will be destabilized and break shortly after the addition of the silicofluoride/sulfamate to the emulsion. Thus, these systems usually involve a two-step treatment. The asphalt emulsion may be sprayed concurrently with a silicofluoride/sulfamate solution onto a substrate or aggregate or the asphalt may be laid down, then sprayed with the gelling system. It is possible to mix the gelling system with the emulsion immediately prior to its placement. However, great care should be taken with the latter approach as any delay in placing the emulsion may result in it setting in the lines, or even in the emulsion tank.

The second destabilizing system may be applied in a similar manner to the first system. The destabilization will not be too rapid if the emulsion is not exposed to heat or it is not permitted to lose ammonia to the environnment. The second system may also be used to provide an emulsion having some pot life.

The following examples are intended to illustrate the invention and not to limit it. In the examples, unless otherwise specified, parts are by dry weight.

## Example 1

A gelling system was prepared comprising equal parts of ammonium sulfamate and monoethanol amine. This gelling system was prepared as a 70 per cent solution. Various amounts of the gelling system were compounded with a latex. The latex was a commercially available styrene butadiene latex sold under the trademark POLYSAR. The latex had a solids content of about 70 per cent. The polymer had a bound styrene content of 24 per cent

The resulting "self gel" latex was then added to a commercially available RS-2 anionic asphalt emulsion to provide 3 per cent rubber by dry weight in the emulsion. The asphalt emulsion was poured into a stainless steel pan and washed and dried limestone aggregate was embedded into the wet asphalt emulsion.

The time for the asphalt to set was measured by determining when the aggregate would not move when lightly touched. The results of the experiment are set forth in Table 1.

TABLE 1

| Asphalt Emulsion + 3% Latex | | | | |
|---|---|---|---|---|
| | Control | A | B | C |
| Gelling Agent per 100 parts of latex<br>Set time | -<br>2 hours | 30<br>less than 2 minutes | 15<br>9 min.15 seconds | 7<br>15 minutes |

This example shows that the gelling system in total amount of from 0.9 to about 0.2 part dry weight per 100 parts of weight of emulsion may be used to control the destablization of latex modified anionic asphalt emulsion from about 2 to 15 minutes as opposed to 2 hours for latex modified asphalt emulsion without the gelling systems of the present invention.

## Example 2

A series of latex modified anionic asphalt emulsion prepared above where tested for their cohesive strength in accordance with a modified Essai d'Adhesion Globale A La Plaque Vialit of the Laboratoire Central des Ponts et Chaussees (sometimes called the French Chip Test).

In this test two stainless steel plates 200 mm/200 mm/3 mm are coated with 1.5 kg dry/m² asphalt emulsion 100 limestone chips retained on a 3/8" screen are put in the asphalt emulsion and the plates

EP 0 367 838 A1

allowed to dry for 24 h at room temperature. Afterwards, one plate is dried for 48 h more at room temperature, while the second plate is aged 48 h in an oven at 60°C. Both plates are then brougnt to 5°C by means of a cooling bath. The plates are then inverted on a four point stand and a steel ball (500 g, 50 mm diam.) is then dropped from a 50 cm height to the back of each plate ten times. The per cent of limestone chips retained in the asphalt was recorded. In this test, anionic asphalt, the control of Example 1 (i.e modified with 3 per cent latex-no gelling agent) and the modified asphalts of runs B and C of Example 1 were used as the asphalt emulsion. The results are presented in Table 2.

Table 2

| Asphalt Emulsion | Control | A | B | C |
|---|---|---|---|---|
| | No latex No gel | A from Ex. 1 | B from Ex. 1 | C from Ex. 1 |
| % limestone chips retained | 0 | 85 | 99 | 99 |

This example demonstrates that latex modified asphalt has improved cohesive strength over unmodified asphalt. The cohesive strength of Latex modified asphalt containing the gelling system of the present invention is not adversely affected by the gelling system.

**Claims**

1) A process for destabilizing an anionic emulsion of bitumen, coal tar or a mixture thereof, comprising at least one film forming polymer in finely divided form, said emulsion being stabilized with an emulsifier which becomes insoluble at a pH less than about 7.5 or in the presence of amine-divalent metal complexes, characterized in that 100 parts by dry weight of said emulsion are contacted with

(a) at least about 0.1 parts by dry weight of a metal or ammonium silicofluoride and from about 0.05 to 10 parts by dry weight of one or more members selected from the group consisting of ammonium sulphamate, ammonium sulfate, $C_{1-8}$ alkyl and hydroxyalkyl amines, and sulfamates, $C_{1-8}$ alkyl and hydroxyalkyl amine sulfates and ammonium salts of $C_{1-6}$ aliphatic carboxylic acids; or

(b) at least about 0.5 parts by dry weight of a compound which releases or produces a divalent metal ion and a sufficient amount of an ammonia or ammonium ion releasing compound to provide at least 0.05 parts by dry weight of ammonia or ammonium ion,

as a destabilizing system.

2) A process according to claim 1 wherein said emulsion comprises per 100 parts by dry weight of bitumen, coal tar or a mixture thereof from 1 to 50 parts by dry weight of at least one polymer or a latex of a polymer, provided said latex is stabilized with an emulsifier which becomes insoluble at a pH less than about 7.5 or in the presence of amine-divalent metal ion complexes, selected from the group consisting of:

(a) polymers comprising:
(i) from 80 to 20 weight per cent of a $C_{8-12}$ vinyl or vinylidene aromatic monomer which may be unsubstituted or substituted by a $C_{1-4}$ alkyl radical or a chlorine atom; and
(ii) from 20 to 80 weight per cent of a $C_{4-6}$ conjugated diolefin which may be unsubstituted or substituted by a chlorine atom;

(b) polymers comprising:
homopolymers or co-polymers of $C_{4-6}$ conjugated diolefins which may be unsubstituted or substituted by a chlorine atom;

(c) polymers comprising:
(i) from about 5 to 40 weight per cent of a $C_{2-8}$ alkenyl nitrile; and
(ii) from about 95 to 60 weight per cent of a $C_{4-6}$ conjugated diolefin;

(d) polymers comprising:
(i) from about 5 to 40 weight per cent of a $C_{2-3}$ olefin; and
(ii) from about 95 to 60 weight per cent of one or more monomers selected from the group consisting of $C_{2-8}$ alkenyl esters of $C_{1-8}$ saturated carboxylic acids, and $C_{1-8}$ alkyl or hydroxy alkyl esters of $C_{3-8}$ ethylenically unsubstituted carboxylic acids; and

(e) polymers comprising:
co- or homo-polymers of $C_{1-8}$ alkyl or hydroxy alkyl esters of $C_{3-8}$ ethylenically unsaturated carboxylic

6

acids.

3) A process according to claim 1 or 2 wherein said destabilizing system comprises per 100 parts by dry weight of said emulsion from about 0.1 to 3 parts by weight of an alkali metal silicofluoride and from about 0.1 to 3 parts by weight of one or more members selected from the group consisting of ammonium sulfamate and $C_{1-4}$ alkyl and hydroxy alkyl amine sulfamates, and ammonium acetate.

4) A process according to claim 1 or 2 wherein said destablizing system comprises per 100 parts by dry weight of said emulsion from about 0.1 to 5 parts by dry weight of one or more members selected from the group consisting of ammonium salts of $C_{1-6}$ organic acids, and $C_{1-4}$ alkyl and hydroxyalkyl amines and at least 3 parts of a zinc, cadmium, and/or calcium ion.

5) A process according to claim 4 wherein said destabilizing system further comprises per 100 parts by dry weight of said emulsion from about 0.1 to 10 parts by dry weight of one or more members selected from the group consisting of ammonium sulfamate, ammonium sulfate, $C_{1-4}$ alkyl and hydroxyalkyl amine sulphamates and $C_{1-4}$ alkyl and hydroxyalkyl amine sulfates.

6) A process according to claim 5, wherein said polymer comprises from about 40 to 60 weight per cent of styrene and from 60 to 40 weight per cent of butadiene.

7. A composition comprising per 100 parts by dry weight of an anionic emulsion of bitumen, coal tar or a mixture thereof, said emulsion being stabilized with an anionic stabilizer which becomes insoluble at a pH less than about 7.5 or in the presence of an amine-bivalent metal complex, 1 to 50 parts by dry weight of at least one film forming polymer in finely divided form and

a) 0.1 to 3 parts, dry weight, of an alkali metal silicofluoride and 0.1 to 5 parts of one or more members consisting of ammonium sulfamate, $C_{1-4}$ alkyl amine sulfamates and ammonium salts of $C_{1-6}$ aliphatic carboxylic acids; or

b) at least 0.5 parts by dry weight of a compound which releases or produces a divalent metal ion and a sufficient amount of an ammonia or ammonium releasing compound to provide at least 0.05 parts by weight of ammonia or ammonium ion as a destabilizing agent.

8. A composition according to claim 8 wherein the polymer is (a) a polymer comprising:

(i) from 80 to 20 weight per cent of a $C_{8-12}$ vinyl or vinylidene aromatic monomer which may be unsubstituted or substituted by a $C_{1-4}$ alkyl radical or a chlorine atom; and

(ii) from 20 to 80 weight per cent of a $C_{4-6}$ conjugated diolefin which may be unsubstituted or substituted by a chlorine atom;

(b) a homopolymer or co-polymer of one or more $C_{4-6}$ conjugated diolefins which may be unsubstituted or substituted by a chlorine atom;

(c) a polymer comprising:

(i) from about 5 to 40 weight per cent of a $C_{3-8}$ alkenyl nitrile;

(ii) from about 95 to 60 weight per cent of a $C_{4-6}$ conjugated diolefin,

(d) a polymer comprising:

(i) from about 5 to 40 weight per cent of a $C_{2-3}$ olefin; and

(ii) from about 95 to 60 weight per cent of one or more monomers selected from the group consisting of $C_{2-8}$ alkenyl esters of $C_{1-8}$ saturated carboxylic acids, and $C_{1-8}$ alkyl or hydroxyalkyl esters of $C_{3-8}$ ethylenically unsubstituted carboxylic acids;

(e) a co- or homopolymer of one or more $C_{1-8}$ alkyl or hydroxy alkyl esters of $C_{3-8}$ ethylenically unsaturated carboxylic acids; or a mixture of two or more such polymers.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 255 348 (EPITOVEGYIANYAGOKAT GYARTO VALLALAT) * Claims 1-5; page 3, lines 11-29 * | 1,2,7,8 | C 08 L 95/00 // (C 08 L 95/00 C 08 L 57:00 ) |
| A,D | EP-A-0 045 619 (BP) * Abstract * | 1,2,7,8 | |
| A | FR-A-2 211 567 (G. RAMBELLI) * Claims 1-5 * & DE-A-2 363 085 (Cat. D) | 1,2,7,8 | |
| A | US-A-3 513 005 (LEONARD CHARLES BRADSHAW) | 1 | |
| A | EP-A-0 012 541 (EXXON RESEARCH AND ENGINEERING) | 1 | |

TECHNICAL FIELDS SEARCHED (Int. Cl.5)

C 08 L

The present search report has been drawn up for all claims

| Place of search | Date of completion of the search | Examiner |
|---|---|---|
| THE HAGUE | 06-07-1989 | GIRARD Y.A. |

EPO FORM 1503 03.82 (P0401)